(19)
Europäisches
Patentamt

European
Patent Office

Office européen
des brevets

(11) **EP 2 436 741 B1**

(12) **EUROPEAN PATENT SPECIFICATION**

(45) Date of publication and mention
of the grant of the patent:
**24.10.2018 Bulletin 2018/43**

(21) Application number: **10780478.3**

(22) Date of filing: **21.05.2010**

(51) Int Cl.:
*C09J 7/20* ^(2018.01)          *G09F 9/00* ^(2006.01)
*C09J 201/00* ^(2006.01)

(86) International application number:
**PCT/JP2010/058600**

(87) International publication number:
**WO 2010/137523 (02.12.2010 Gazette 2010/48)**

(54) **ADHESIVE MATERIAL HAVING REDETACHABILITY**

ABLÖSBARES HAFTMATERIAL

MATÉRIAU ADHÉSIF REDÉCOLLABLE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **26.05.2009 JP 2009126292**

(43) Date of publication of application:
**04.04.2012 Bulletin 2012/14**

(73) Proprietor: **Mitsubishi Chemical Corporation
Chiyoda-ku,
Tokyo 100-8251 (JP)**

(72) Inventors:
• **NIIMI, Kahoru
Nagahama-shi
Shiga 526-8660 (JP)**

• **INENAGA, Makoto
Nagahama-shi
Shiga 526-8660 (JP)**

(74) Representative: **Gille Hrabal
Brucknerstrasse 20
40593 Düsseldorf (DE)**

(56) References cited:
**EP-A1- 2 204 425          EP-B1- 1 814 935
WO-A1-2008/056788          WO-A1-2008/072462
WO-A1-2009/054108          JP-A- 3 170 573
JP-A- 7 041 736          JP-A- 2001 075 494
JP-A- 2003 177 241          JP-A- 2003 301 146
JP-A- 2004 231 723          JP-A- 2004 300 231
JP-A- 2006 169 354          JP-A- 2007 169 327
JP-A- 2008 007 535          JP-U- H0 478 241
JP-U- 52 033 673**

**Description**

TECHNICAL FIELD

The present invention relates to an adhesive sheet laminate which can be used for bonding two members (i.e. adherends) and has removability enabling detachment after bonding, and an image display device using the adhesive material.

BACKGROUND ART

In a flat image display device used for a cellular phone, a PHS device, a PDA terminal, a portable game machine, a personal computer, a navigator for an automobile, and a digital camera, etc., a light transmitting protective member is often disposed at light exit side of an image display unit for the purpose of protecting a surface of an image display unit or giving a touch panel function, etc. In such case, when a gap, i.e. an air layer, is present between the light transmitting protective member and the image display unit, light emitted from the image display unit causes an occurrence of interface reflection in the interface of the air layer, leading to a great loss of emitted light before it reaches a user. Further, as outside light also causes an occurrence of interface reflection in the interface of the air layer, light transmission rate of the light transmitting member is lowered, and therefore visibility of the image display unit is decreased. There is a also concern that, according to the constitution in which only the light transmitting member is disposed, the damaged light transmitting member may be scattered when an impact like a drop etc. is applied on an image display device.

In this connection, in order to decrease interface reflection by an air layer, a method of filling voids of a light transmitting protective member and an image display unit with an adhesive sheet to ensure visibility and prevent scattering at the time of breakage is suggested.

As described above, when a light transmitting protective member and an image display unit are integrated in a single body via an adhesive sheet, the first problem to be solved is reliability of an adhesive surface. Specifically, if there is a defect in a bonding interface between an adherend and an adhesive sheet, problems like foaming or detachment arise in the interface. Such phenomenon involves aggregation of air present inside, wherein the aggregation is caused by, as a nucleus, a bonding distortion or a defect in an adhesive sheet or in a bonding interface with an adherend under high temperature (high humidity) condition or a dramatic temperature change, and as a result, an adhesive sheet having abnormal cohesiveness or adhesiveness caused by environmental change does not withstand gas pressure of aggregated air, yielding an occurrence of foaming or detachment.

When an integrated body is produced by bonding with an adhesive sheet as described above, operational mistakes like accidental introduction of an air bubble or a foreign material may occur during a bonding operation. Thus, redetachment may be required to correct such mistakes. Redetachment may be also required to recycle a part of members when an image display device is disposed, etc. As such, an adhesive material used for such purpose may be required to have removability (i.e. reworkability).

Conventionally, as an adhesive sheet having removability (i.e. reworkability), Patent Document 1 discloses a liquid crystal display integrated type transparent touch panel in which a transparent repeeling sheet is mounted entirely on the bottom surface of a fixed electrode member of a transparent touch panel and the top surface of a liquid crystal display, and a sheet which is formed of a gel sheet of a transparent polymer adhesive as the transparent repeeling sheet.

Further, Patent Document 2 discloses a double-sided adhesive sheet which is characterized in that a touch panel side transparent adhesive layer is formed on the one face of the transparent base material and a display device side transparent adhesive layer is formed on the other face, and that the sheet is constructed to be redetachable from the display surface of the display device along with the touch panel. Specifically, it discloses a constitution that the 180° peel adhesive strength of the touch panel side transparent adhesive layer is set to be larger than that of the display device side transparent adhesive layer so that redetachment from the display surface of the display device along with the touch panel can be achieved.

Patent Document 3 discloses a double-sided adhesive sheet which is constituted so as to be redetachable from at least either of the touch panel or the display surface of the display device, and which, in addition, is characterized by having optical isotropy, wherein the removability is obtained by having smaller adhesiveness of an adhesive layer in a display device side against a display surface of a display device compared to adhesiveness of an adhesive layer in a touch panel side against bonding surface of a touch panel.

Patent Document 4 discloses a removable acrylic pressure-sensitive adhesive tape or sheet which comprises a pressure-sensitive adhesive layer containing a thermal blowing agent, a release film and a microparticle-containing viscoelastic substrate. The release film layer and the microparticle-containing viscoelastic substrate form a multilayer structure on one side of the adhesive layer. The latter is arranged in direct contact with the release film layer. The adhesive tapes or sheets comprise an internal release film and are detachable at an interface between the adhesive layer and the release film.

Patent Document 1: Japanese Patent Application Laid-Open (JP-A) No. 10-260395
Patent Document 2: JP-A No. 2003-238915
Patent Document 3: JP-A No. 2004-231723
Patent Document 4: WO 2009/054108 A1

DISCLOSURE OF INVENTION

PROBLEM TO BE SOLVED BY THE INVENTION

Most of conventional adhesive materials having removability (i.e. reworkability) (see, Patent Documents 1 to 3, for example) has a constitution of redetachable bonding surface between two members, for example, redetachable bonding surface between a touch panel and an adhesive material or redetachable bonding surface between a display device and an adhesive material, when a touch panel and a display device are bonded to each other.
However, to have removability, it is required for an adhesive material to have lowered detachment force in an adhesive surface with an adherend. As such, there is a problem that detachment or foaming is likely to occur. In other words, the removability and reliability with respect to occurrence of detachment or foaming, etc. are in a trade-off relation, and therefore it is difficult to achieve both of them.
Under the circumstances, object of the invention is, in relation to an adhesive material used for bonding two members (i.e. adherends), to provide a new adhesive material whereby removability and reliability of an adhesive surface with respect to detachment and occurrence of foaming, etc. can be obtained.

MEANS FOR SOLVING PROBLEM

To solve the problems described above, provided by the invention is an adhesive sheet laminate according to claim 1 to be used for bonding two adherends and having an interface (referred to as an "internal detachment interface"), which is detachable from a surface different from bonding surfaces of the adhesive material with the adherends, in the inside, i.e. an adhesive material with a constitution that an internal detachment interface is included in the inside between the adhesive layers.
According to the invention, a detachable interface (internal detachment interface) is included in the inside of the adhesive material, i.e. not on a bonding surface between the adhesive material and adherends. Therefore, regardless of the internal detachment interface, reliability of the adhesive surface with respect to the adherends, e.g. bonding force with the adherends on an adhesive surface, can be increased. Also, a defect which causes detachment or occurrence of foaming can be reduced. As a result, both the removability and the reliability of an adhesive surface can be obtained. Embodiments described herein which are not covered by the claims merely serve to illustrate the technical context of the present invention.

BRIEF DESCRIPTION OF DRAWINGS

FIG. 1 is a sectional view that illustrates one exemplary constitution of an embodiment (adhesive material 101).
FIG. 2 is a sectional view that illustrates one exemplary constitution of an embodiment (adhesive material 102).
FIG. 3 is a sectional view that illustrates another exemplary constitution of an embodiment (adhesive material 102).
FIG. 4 is a sectional view that illustrates one exemplary constitution of an embodiment (adhesive material 103).
FIG. 5 is a sectional view that illustrates one exemplary constitution of an embodiment (adhesive material 105).
FIG. 6 is a sectional view illustrating a constitution of adhesive sheet 10 which is produced in advance as a preparation member used for producing an adhesive material of the Examples and the Comparative examples.
FIG. 7 is a sectional view illustrating a constitution of adhesive sheet 20 which is produced as a preparation member in the same manner as above in advance.
FIG. 8 is a sectional view illustrating a constitution of adhesive sheet 30 which is produced as a preparation member in the same manner as above in advance.
FIG. 9 is a sectional view illustrating a constitution of adhesive sheet 40 which is produced as a preparation member in the same manner as above in advance.
FIG. 10 is a sectional view illustrating a constitution of adhesive sheet 50 which is produced as a preparation member in the same manner as above in advance.
FIG. 11 is a sectional view illustrating a constitution of adhesive sheet 60 which is produced as a preparation member in the same manner as above in advance.

FIG. 12 is a sectional view that illustrates a constitution of adhesive material 110 relating to one example of the disclosure.

FIG. 13 is a sectional view that illustrates a constitution of adhesive material 120 relating to one example of the disclosure.

FIG. 14 is a sectional view that illustrates a constitution of adhesive material 130 relating to one example of the disclosure.

FIG. 15 is a sectional view that illustrates a constitution of adhesive material 140 relating to one example of the disclosure.

FIG. 16 is a sectional view that illustrates a constitution of adhesive material 210 as Comparative example 1.

FIG. 17 is a sectional view that illustrates a constitution of adhesive material 220 as Comparative example 2.

FIG. 18 is a sectional view that illustrates a constitution of adhesive material 230 as Comparative example 3.

FIG. 19 is a sectional view that illustrates a constitution of adhesive material 240 as Comparative example 4.

FIG. 20 is a sectional view that illustrates a constitution of adhesive material 250 as Comparative example 5.

FIG. 21 is a sectional view that illustrates a constitution of a laminate produced as Comparative example 6.

FIG. 22 is a sectional view that illustrates a constitution of adhesive material 150 relating to one example of the disclosure.

BEST MODE(S) FOR CARRYING OUT THE INVENTION

Herein below, exemplary embodiments will be explained.

(First embodiment)

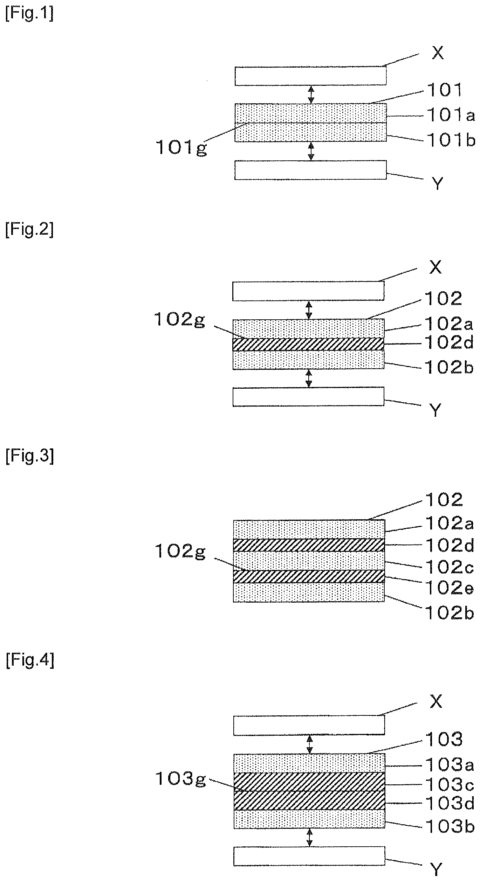

The adhesive material 101 (referred to as the "present adhesive material 101") relating to the first embodiment has, as illustrated in FIG. 1, at least two layers of the adhesive layers 101a and 101b and it has a constitution that a detachable interface (: the internal detachment interface 101g), which is different from bonding surfaces of the adhesive material with the adherends, is provided between the adhesive layers 101a and 101b.

According to the present adhesive material 101, the interlayer peel strength of the adhesive layers 101a and 101b is set to be lower than the peel strength of the bonding surface between the adherend X and the adhesive layer 101a and the peel strength of the bonding surface between the adherend Y and the adhesive layer 101b so as to have the internal detachment interface 101g between the adhesive layers 101a and 101b.

More specifically, a known release agent is coated on a surface of one side or both sides of the adhesive layers 101a and 101b or a low surface tension component like silicone modified acrylate or fluoroalkyl modified acrylate is added to the adhesive layer in one side to lower the surface tension. By doing so, a difference in surface tension is given between the adhesive layers 101a and 101b so that an interface between the adhesive layers 101a and 101b is provided as the internal detachment interface 101g.

Further, it is also possible that, as disclosed in JP-A No. 2006-299053, at least one of the adhesive layers 101a and 101b is produced as a transparent adhesive sheet having different adhesive property between the inside and the outside and the peel strength between the adhesive layers 101a and 101b is adjusted to have the interface provided as the internal detachment interface 101g.

Herein, the transparent adhesive sheet having different adhesive property between the inside and the outside as disclosed in JP-A No. 2006-299053 can be produced according to the specifications in the paragraphs [0008] to [0039] thereof. For example, when an adhesive sheet is produced with a resin composition containing (meth)acrylic acid ester copolymer polymer and a hydrogen abstraction type fluorescent initiator, a greater amount of UV light in the range of 200 nm to 280 nm (in particular 254 nm) is irradiated on a surface which is desired to have lower adhesiveness compared to a surface on the other side. As a result, cross-linking is further promoted than the surface on the other side to yield a harder surface, and thus adhesiveness can be reduced more. More specifically, there is a method in which a resin containing (meth)acrylic acid ester copolymer polymer and the hydrogen abstraction type fluorescent initiator is molded into a sheet shape and a different amount of UV irradiation with wavelength of 254 nm is applied on the inside and outside surface of the sheet. For example, it is possible that the surface of one side of a sheet is irradiated with UV light with wavelength of 254 nm and with UV light with wavelength of 365 nm while the surface of the other side of a sheet is irradiated with UV light with wavelength of 365 nm but not with UV light with wavelength of 254 nm.

It is required for the present adhesive material 101 to have a constitution that the internal detachment interface 101g is provided between two layers of the adhesive layers 101a and 101b. Lamination of a layer other than those, for example, lamination of another layer on the outer side of the adhesive layers 101a and 101b can be optionally carried out. A release film may be also laminated as described below.

(Second embodiment)

The adhesive material 102 (referred to as the "adhesive material 102") relating to the second embodiment has at least two layers of the adhesive layers 102a and 102b and at least one layer of 102d which is different from the adhesive layers, and it has a constitution that one interface of the interfaces between the layer 102d and the adhesive layers 102a and 102b is provided as an internal detachment interface.

For example, it can have at least two layers of the adhesive layers 102a and 102b and at least one layer of the substrate layer 102d and has a constitution that a detachable interface (: the internal detachment interface 102g), which is different from bonding surfaces of the adhesive material with the adherends, is provided between the substrate layer 102d and at least one layer of the adhesive layer 102a.

As an example, as illustrated in FIG. 2, it can be constructed by having the substrate layer 102d between two adhesive layers 102a and 102b and forming the internal detachment interface 102g between the substrate layer 102d and the adhesive layer 102a.

According to the adhesive material 102, the peel strength of the substrate layer 102d and the adhesive layer 102a is set to be lower than any one of the peel strength of the adherend X and the adhesive layer 102a, the peel strength of the adherend Y and the adhesive layer 102b, and the peel strength of the substrate layer 102d and the adhesive layer 102b so that the internal detachment interface 102g can be provided between the substrate layer 102d and the adhesive layer 102a.

Herein, as a material for constituting the substrate layer 102d, a transparent polymer sheet can be appropriately selected and used, for example.

Examples of the transparent polymer sheet include polyesters like polyethylene terephthalate and polyethylene naphthalate, acrylates, vinyl chlorides, polycarbonates, polystyrenes, polyurethanes, and various polyolefins like polyethylene and polypropylene as well as a material having TAC film as a main component.

Thickness of the substrate layer 102d is preferably 15 $\mu$m to 200 $\mu$m, and more preferably 25 $\mu$m to 100 $\mu$m from the viewpoint of processability and cost.

In the adhesive material 102, to provide the internal detachment interface 102g between the substrate layer 102d and the adhesive layer 102a, a release layer may be formed on a surface of the substrate layer 102d, that is an interface with the adhesive layer 102a, for example.

The release layer may be formed by coating with a coating material which is produced by dissolving resins such as a silicone resin, a fluoro resin, an amino alkyd resin, a polyester resin, a paraffin wax, an acryl resin, a urethane resin, a melamine resin, a urea resin, a urea-melamine resin, a cellulose resin or a benzoguanamine resin, and a surfactant alone or mixture thereof as a main component in an organic solvent or water by a common printing like gravure printing, screen printing, and off-set printing followed by drying (or curing in case of curable coating film such as a thermocurable resin, a UV-curable resin, an electron beam-curable resin, and a radiation-curable resin). In particular, the release treatment is preferably carried out by using silicone, a fluorine compound, and an alkyl resin type release treatment agent.

The peel strength of the release layer can be adjusted by controlling the skeleton, addition amount or a cross-linking level and the like of a resin which constitutes the release layer, e.g. a silicone compound, or by controlling the polarity difference or fluidity characteristics among the resins which constitute two sides to be bonded, with an aid of an additive or a resin composition and the like.

Thickness of the release layer is not specifically limited. It may be formed to obtain 0.1 $\mu$m to 2 $\mu$m or so, for example. When it is smaller than 0.1 $\mu$m, peeling is difficult to achieve. On the other hand, when it is larger than 2 $\mu$m, the peeling may occur too easily so that it can be released before transfer or cost increases, and therefore undesirable.

In the adhesive material 102, a means for forming the internal detachment interface 102g between the substrate layer 102d and the adhesive layer 102a is not limited to the means described above for forming a release layer on surface of the substrate layer 102d which serves as an interface with the adhesive layer 102a. For example, the adhesive layer 102a can be formed by selecting an adhesive having relatively low adhesiveness against the material which constitutes the substrate layer 102d. Selecting appropriate adhesives to inhibit adhesiveness on a certain material belongs to common knowledge of a skilled person in the art. It is known that a resin film having low polarity like polypropylene and the like has a relatively small tendency for inhibiting adhesiveness with acrylic adhesives.

Meanwhile, the surface of the substrate layer 102d that is opposite to the internal detachment interface 102g does not need any special treatment. However, various physical or chemical treatments like a blast treatment, a corona treatment, a plasma treatment, a flame treatment, and a primer treatment and the like may be carried out for the purpose of improving adhesiveness with the adhesive layer 102b.

Specific examples of a method of producing the adhesive material 102 include a method of forming an adhesive layer by flow-casting an acrylic adhesive composition solution on surfaces of a polyethylene terephthalate film that are either treated or untreated with a release agent, wherein the film is prepared by peeling a surface of one side and forming a release layer thereon.

As long as the adhesive material 102 is an adhesive material having two adhesive layers and one substrate layer and a constitution that an internal detachable interface is provided between the substrate layer and the adhesive layer, it may optionally have an additional layer.

As illustrated in FIG. 3, for example, it may have a constitution that three layers of the adhesive layers 102a, 102b, and 102c and two layers of the substrate layers 102d and 102e are included, two layers of the substrate layers 102d and 102e are provided between two layers of the adhesive layers 102a and 102b, one adhesive layer 102c is provided between two layers of the substrate layers 102d and 102e, and the interface between the adhesive layer 102c and one side of the substrate layer 102d (102e) is the internal detachment interface 102g. Further, a release film may be laminated as described below.

Further, in the adhesive material 102 described above, it is also possible that the release agent layer 102h is formed instead of the substrate layer 102d and a detachable interface (: the internal detachment interface 102g), which is different from bonding surfaces of the adhesive material with the adherends, is provided between the release agent layer 102h and at least one layer of the adhesive layer 102a.

The release agent layer 102h may be formed by coating with a coating material which is produced by dissolving resins such as a silicone resin, a fluoro resin, an amino alkyd resin, a polyester resin, a paraffin wax, an acryl resin, a urethane resin, a melamine resin, a urea resin, a urea-melamine resin, a cellulose resin or a benzoguanamine resin, and a surfactant alone or mixture thereof as a main component in an organic solvent or water by a common printing like gravure printing, screen printing, and off-set printing followed by drying (or curing in case of curable coating film such as a thermocurable resin, a UV-curable resin, an electron beam-curable resin, and a radiation-curable resin). In particular, the release agent layer 102h is preferably formed by silicone, a fluorine compound, and an alkyl resin and the like.

The peel strength of the release agent layer 102h can be adjusted by controlling the skeleton, addition amount or a cross-linking level of a resin which constitutes the release agent layer 102h, e.g. a silicone compound of a resin constituting the release agent layer 102h, or by controlling the polarity difference or fluidity characteristics among the resins which constitute two sides to be bonded, with an aid of an additive or a resin composition and the like.

Thickness of the release agent layer 102h is not specifically limited. It may be formed to obtain 0.1 $\mu$m to 500 $\mu$m or so, for example. When it is the same or greater than 0.1 $\mu$m, peeling may easily occur. On the other hand, when it is the same or less than 500 $\mu$m , release before transfer can be prevented and it is also desirable from the viewpoint of cost.

(Third embodiment)

The adhesive material 103 (referred to as the "present adhesive material 103") relating to the third embodiment has, as illustrated in FIG. 4, at least two layers of the adhesive layers 103a and 103b and at least two layers of the substrate layers 103c and 103d, and it has a constitution that a detachable interface (: the internal detachment interface 103g), which is different from bonding surfaces of the adhesive material with the adherends, is provided between the substrate layer 103c and the substrate layer 103d.

According to the present adhesive material 103, to form the internal detachment interface 103g between the substrate layer 103c and the substrate layer 103d, the peel strength of the substrate layer 103c and the substrate layer 103d is set to be lower than any of the peel strength of the adherend X and the adhesive layer 103a, the peel strength of the adherend Y and the adhesive layer 103b, the peel strength of the substrate layer 103c and the adhesive layer 103a, and the peel strength of the substrate layer 103d and the adhesive layer 103b.

To form the internal detachment interface 103g between the substrate layer 103c and the substrate layer 103d, the peel strength of them is adjusted by co-extruding a resin having relatively large difference in SP value (compatibility parameter), co-extruding a resin added with a suitable additive, or controlling the glass transition temperature of a liquid phase resin composition constituting one substrate layer and coating the liquid phase resin composition on a surface of the other substrate followed by curing.

As an exemplary method of producing the present adhesive material 103, polyethylene and polymethyl methacrylate are co-extruded to produce a substrate which consists of two layers with two kinds of resins and an adhesive layer is formed on both surfaces of the substrate. Further, it is also possible that a liquid phase active energy ray-curable resin composition is coated on a film substrate like polyethylene terephthalate and the like and the composition is cured by irradiation of active energy ray to produce a substrate layer which consists of two layers with two kinds of resins and an adhesive layer is formed on both surfaces of the substrate.

It is required for the present adhesive material 103 to have two layers of the adhesive layers 103a and 103b and two layers of the substrate layers 103c and 103d and a constitution that the internal detachment interface 103g is provided in the interface between the substrate layer 103c and the substrate layer 103d. It may have an additional layer. Further, a release film may be laminated as described below.

(Fourth embodiment)

The adhesive material 104 (referred to as the "present adhesive material 104") relating to the fourth embodiment is, although not being illustrated, an adhesive material with a release film (in the following examples, referred to as an "adhesive sheet laminate") which has a constitution that the release film 104a is laminated on one surface side of any of the present adhesive material 101 to the present adhesive material 103 and an optional substrate 104c is laminated on the other surface side.

With respect to the adhesive material 4, it is required that the peel strength of the internal detachment interface (101g, 102g, and 103g) is greater than the peel strength of the interface with the release film 104a (also referred to as "release interface") but lower than the peel strength of the adherend and a surface exposed by redetachment the release film 104a.

(Fifth embodiment)

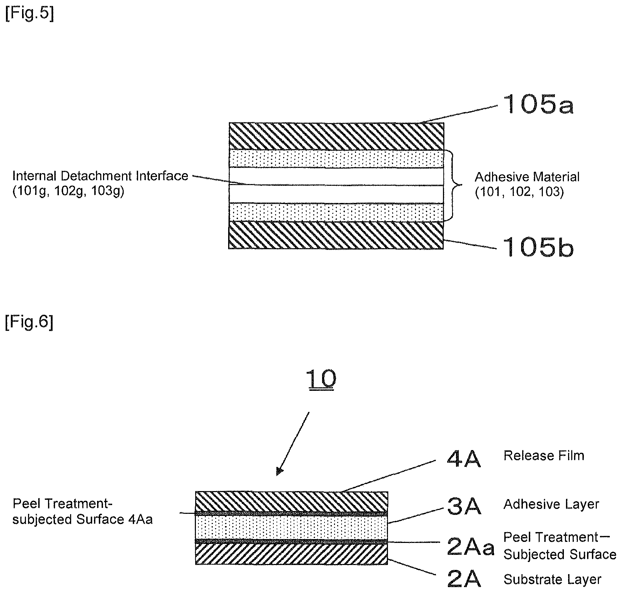

The adhesive material 105 (referred to as the "present adhesive material 105") relating to the fifth embodiment is, as illustrated in FIG. 5, an adhesive sheet laminate (in the following examples, referred to as an "adhesive sheet laminate") which has a constitution that the release films 105a and 105b are laminated on one surface side of any of the present adhesive material 101 to the present adhesive material 103.

With respect to the adhesive material 105, it is required that the peel strength of the internal detachment interface (101g, 102g, and 103g) is greater than the peel strength of the interface with the release films 105a and 105b (also referred to as "release interface") but lower than the peel strength of the adherend and a surface exposed by redetachment the release films 105a and 105b.

Further, in order to easily remove the release film, it is preferable that the peel strength of the interface between the release film 105a and the adhesive material (the present adhesive materials 101, 102, and 103) (also referred to as "release interface") is different from the peel strength of the release interface between the release film 105b and the adhesive material (the present adhesive materials 101, 102, and 103).

It is more preferable that the 90° peel strength (A) of the release interface between the release film 105a and the adhesive material (the present adhesive materials 101, 102, and 103), the 90° peel strength (B) of the release interface between the release film 105b and the adhesive material (the present adhesive materials 101, 102, and 103), and the 90° peel strength (C) of the internal detachment interface (101g, 102g, and 103g) satisfy the following relations (1) to (3):

$$(1) \cdots (A) < (B) < (C)$$

$$(2) \cdots (B) / (A) = 1.1 \text{ to } 3.0$$

$$(3) \cdots (C) / (B) = 1.1 \text{ to } 7.0.$$

When the above relations (1) to (3) are satisfied, an operation of redetachment the release film 105a followed by bonding an exposed surface to an adherend and then redetachment the release film 105b followed by bonding an exposed surface to another adherend can be carried out more smoothly and thoroughly. As a result, reliability of a adhering surface with the adherend can be further improved and defects causing detachment or foaming can be further reduced. Further, it is also possible that, after bonding adherends to each other, redetachment can be carried out via an internal detachment interface instead of an adhesive surface with the adherend.

Further, it is particularly preferable that (B) / (A) above is from 1.5 to 2.5.

Further, it is particularly preferable that (C) / (B) above is from 1.5 to 5.0.

(Composition of adhesive material layer component)

With respect to the present adhesive materials 101 to 105 explained above, composition of the adhesives which constitute each adhesive layer can be optionally selected.

To adjust the peel strength of an adhesive layer, in other words to adjust the adhesiveness, the glass transition temperature of a polymer constituting the adhesive layer or amount of a polar component or cohesive component may be modified or an addition amount of a cross-linking agent can be modified. It can be also adjusted by suitably adding a tackifier, etc.

Examples of a base polymer (i.e. major agent) which constitutes the adhesive layer include polymers of acryls, silicones, rubbers, polyurethanes, and polyesters as a major agent of adhesive. Of these, from the viewpoint of transparency, durability, and cost; polymers of acryls, in particular an acrylic acid ester polymer (including copolymers thereof), are used as a base polymer (i.e. main agent). It is preferable that the adhesive layer is formed by cross-linking by using a heat cross-linking agent or UV cross-linking agent and the like.

Examples of the acrylic monomers or methacrylic monomers used in polymerization of the acrylic acid ester polymers include, for example, 2-ethylhexyl acrylate, n-octyl acrylate, n-butyl acrylate, isodecyl acrylate, ethyl ethacrylate and the like. To these main monomers, a cross-linking monomer like hydroxyethyl acrylate, acrylic acid, itaconic acid, glycidyl acrylate, glycidyl methacrylate, methylol acrylamide, and maleic anhydride or a highly cohesive monomer or a monomer having a functional group like methyl methacrylate, methyl acrylate, acrylamide, acrylonitirle, methacrylonitrile, vinyl acetate, styrene, fluoro acrylate, and silicone acrylate may be suitably added.

As the polymerization treatment using these monomers, known polymerization methods such as solution polymerization, emulsion polymerization, massive polymerization or suspension polymerization may be adopted. At this time, a polymerization initiator such as a thermal polymerization initiator and a photopolymerization initiator may be used depending on the polymerization method to obtain an acrylic acid ester copolymer.

Among them, in order to obtain an adhesive layer with high reliability, the weight average molecular weight of the acrylic acid ester copolymer is preferably as high as possible within the range that the processability is not impaired. It is preferably in the range of 100,000 to 1,000,000. When the molecular weight is too low, fluidity becomes too high, yielding an insufficient cohesive property. As a result, there is a tendency that the holding property and adhesiveness to an adherend are impaired.

Further, the glass transition temperature (theoretical Tg) of the acrylic acid ester copolymer is preferably in the range of -70°C to 0°C, and more preferably in the range of -55°C to 0°C. A material with excessively low theoretical Tg has little content of a highly cohesive component or a highly polar component in the polymer, and therefore it tends to have a poor holding property or adhesiveness to an adherend. On the other hand, when theoretical Tg is too high, it is undesirable in that a bonding property and pressure sensitive adhesiveness at room temperature are impaired.

Further, to provide an adhesive layer with a bonding property or durability, a modifying agent like silane coupling agent, various stabilizing agents like anti-oxidant, deterioration preventing agent, and UV absorbing agent, and a tackifier, etc. may be appropriately added to control physical properties.

(Peel strength)

With respect to the adhesive material of the present invention (for example, the present adhesive materials 101 to 105), the 90° peel strength of the internal detachment interface (101g, 102g, and 103g) is preferably from 0.01 N/50 mm to 7 N/50 mm and more preferably 0.02 N/50 mm to 5 N/50 mm.

When the peel strength is the same or less than 7 N/50 mm, redetachment property of a plate-like member having substantially no flexibility such as an image display unit or surface protection member of an image display device is not lowered even after the member is integrated. When the peel strength is the same or more than 0.01 N/50 mm, a balance of the release forces of the release films laminated on both surfaces of the adhesive materials can be obtained, and as a result, detachment of the internal detachment interface can be prevented when the release film is peeled off.

Further, the 90° peel strength for the internal detachment interface (101g, 102g, and 103g) can be determined as follows: an adhesive material is prepared as a test strip with width of 50 mm, one side of the internal detachment interface is fixed while the other side is pulled and peeled off at peeling speed of 300 mm/min at 90° angle, and the stress applied for the peeling was measured.

Specifically, when an internal detachment interface is present between a substrate and an adhesive layer, the adhesive layer is fixed on a soda lime glass plate and the substrate layer is pulled at peeling speed of 300 mm/min at 90° angle to determine the stress.

Further, when an internal detachment interface is present between two substrates, one substrate is fixed on a soda lime glass plate and the other substrate is pulled at peeling speed of 300 mm/min at 90° angle to determine the stress.

Further, the 90° peel strength of the adhesive material of the present invention (for example, the present adhesive materials 101 to 105) compared to an adherend is, at peeling speed of 5 mm/min, preferably 3 N/25 mm or more, and more preferably 5 N/25 mm or more.

When the peel strength of an interface with an adherend satisfies the above condition with low speed range, long term storage property or antifoaming property due to a change in environment and reliability against detachment can be obtained for the interface bonded to an adherend.

Further, the 90° peel strength of the adhesive material of the present invention with an adherend can be obtained by assuming an adherend as a glass plate (soda lime glass). Specifically, the 90° peel strength against a glass plate (soda lime glass) can be obtained as follows: by using an adhesive material (test strip) with width of 25 mm, an adhesive side which is exposed by peeling the release film is bonded onto a glass plate (soda lime glass), the strip is then pulled and peeled off at peeling speed of 5 mm/min at 90° angle, and the stress applied for the peeling was measured.

(Image display device)

When the present adhesive material 101 to the present adhesive material 103 are prepared with a material with excellent transparency, the present adhesive material 101 to the present adhesive material 103 can be preferably used as an adhesive material to assemble various image display devices. Specifically, by placing the adhesive material of the invention (the present adhesive material 101 to the present adhesive material 103) between any two optical members selected from a transparent covering material, a touch panel material, and an image display device and closely integrating them, an image display device can be produced. Because this image display device has the internal detachment interface (101g, 102g, and 103g) that can be detached from a side different from the bonding surfaces between an adhesive material and an adherend, detachment from the internal detachment interface that is present inside of the adhesive material can be achieved instead of detachment from an interface between the optical member and the adhesive material. Thus, each of the transparent covering material, tough panel material, and image display device can be used again.

Further, even after bonding a transparent covering material and an image display device to each other, repair and exchange, etc. that are needed as a result of erroneous bonding or use for a long period of time can be carried out.

EXAMPLES

Herein below, the invention is explained in greater detail in view of the examples. However, the scope of the invention is defined by the claims.

<Evaluation>

First, the evaluation method of the Examples and Comparative examples will be described.

(Measurement of peel strength of each interface)

The 90° peel strength of each interface (A) to (C) in the adhesive sheet laminate obtained from the Examples 1 to 4 and the Comparative examples 1 to 5 was obtained as follows: a surface side of a sample for evaluation having 50 mm wide, which is opposite to a surface side to be measured (i.e. it indicates an opposite interface (B) side if an interface (A) is measured), is fixed on a hard base member, a tip of a redetachable peeling layer is peeled off, fixed on an elongation apparatus (i.e. peeling apparatus), and pulled at peel speed of 300 mm/min in 90° direction with respect to an unpeeled portion of the test sample to peel off the layer, and the elongation strength is measured by using a load cell and the peel strength of each interface is calculated.

With respect to the order of measurement, it was measured in an order of high detachability, i.e. from the interfaces (A), (B), to (C). For measuring the peel strength of the interface (A), a substrate layer at the interface (B) side of an the adhesive sheet laminate is fixed on a hard base member by using a double-sided tape (No. 5000, manufactured by Nitto Denko) while the substrate layer remains in unpeeled state, and the measurement is carried out by pulling the substrate layer in the interface (A) side.

For measuring the peel strength of the interface (B), an adhesive surface obtained by peeling the substrate layer in the interface (A) side was fixed on a soda lime glass.

For measuring the peel strength of the interface (C), the remaining adhesive surface of the interface (B), which exists on the soda lime glass after measuring the peel strength of the interface (B), was applied with a new support film (trade name: DIAFOIL S-100, manufactured by Mitsubishi Plastics, Inc.) having thickness of 38 $\mu$m by roll compression for 5 sec with pressure of 2 kgf under the condition of 65% RH at 23°C. Then, the support film was pulled to measure the peel strength of the interface (C).

Further, the case in which no peeling can be made is indicated as "-" in the table.

(Measurement of peel strength against glass)

The 90° peel strength of each of the interfaces (A) and (B) in the adhesive sheet laminate obtained from the Examples 1 to 4 and the Comparative examples 1 to 5 against the glass surface was obtained as follows: an adhesive surface obtained by peeling the release film of a sample for evaluation having width of 25 mm was applied to a soda lime glass by roll compression for 5 sec with pressure of 2 kgf under the condition of 65% RH at 23°C, the support layer of the other interface or the interface (C) is pulled, and applied with a new support film (trade name: DIAFOIL S-100, manufactured by Mitsubishi Plastics, Inc.) having thickness of 38 μm by roll compression.

After that, pressure forming treatment was carried out for 15 min under the condition including 0.35 MPa at 40°C. After keeping it for one day in a normal state, the support film was pulled at peeling speed of 5 mm/min in the 90° direction to peel the layer. By measuring the elongation strength by using a load cell, the 90° peel strength of the adhesive sheet laminate against glass was determined.

Further, the symbol "*" in the table means that the interface with glass is a redetachable interface and the peel strength of corresponding interface was measured.

(Production of glass laminate sample)

The adhesive sheet laminate obtained from the Examples 1 to 4 and the Comparative examples 1 to 5 was cut to have a size of 90 mm x 90 mm. An adhesive surface obtained by peeling the release film in the interface A side was applied to a soda lime glass (100 mm x 100 mm x thickness of 3 mm) by roll compression for 5 sec with pressure of 2 kgf under the condition of 65% RH at 23°C.

Thereafter, an adhesive surface obtained by peeling the release film in the other interface B side was overlaid with a glass plate (100 mm x 100 mm x thickness of 3 mm) and compressed by roll compression for 5 sec with pressure of 2 kgf under the condition of 65% RH at 23°C.

After that, pressure forming treatment was carried out for 15 min under the condition including 0.35 MPa at 40°C. After keeping it for one day in a normal state, a sample for evaluation (i.e. glass laminate sample) was produced.

Further, in the adhesive sheet laminate 110 of the Example 1, for example, when the release film 4A is peeled off and the laminate is bonded to a soda lime glass plate to measure the bonding force, the adhesive layer 3A is brought into contact with the glass plate so that the interface between them becomes an interface for evaluation. As such, in the Table 1 and Table 2, the interface measured is indicated as "bonding surface (A)" in view of the counterpart (A) which is in contact with the glass plate. The same shall apply for others herein below.

(Evaluation of removability)

With respect to the sample for evaluation prepared above (i.e. glass laminate sample), the blade tip of a scraper is pushed and squeezed into the interface (C) of the sample for evaluation of the Example (i.e. glass laminate sample), and then occurrence of any detachment was observed. Also, the blade tip of a cutter is pushed and squeezed into the interface with the glass for a sample for evaluation of the Comparative example (i.e. glass laminate sample), and then occurrence of any detachment was observed.

Removability was evaluated according to the following criteria.

○: It was easily detached by pushing and squeezing of the blade tip of a scraper.

Δ: It was detached by pushing and squeezing of the blade tip of a scraper and brief twisting of the blade tip.

×: No detachment was observed even after pushing and squeezing of the blade tip of a scraper followed by brief twisting of the blade tip, or a crack appeared on the glass plate before any detachment.

(Durability)

The sample for evaluation as prepared above (i.e. glass laminate sample) was kept for 100 hours under the condition of 80% RH at 80°C. After that, the appearance of the sample was observed visually and evaluated according to the following criteria.

○: No deterioration in appearance like detachment or foaming was observed in the adhesive layer.

×: Deterioration in appearance like detachment or foaming was observed in the adhesive layer.

<Production of constitutional member>

As a constitutional member of the Example and Comparative example, the adhesive sheets 10 to 40 and the substrate sheets 50 and 60 were produced in advance as follows.

(Adhesive sheet 10)

To 1 kg solution of an acrylic resin copolymer diluted in toluene and cyclohexane (trade name: POLYTHICK AH310-S, manufactured by Sanyo Chemical Ind. Ltd., solid concentration of 37%), 10 g of a curing agent (trade name:

POLYTHICK SC-75, manufactured by Sanyo Chemical Ind. Ltd.) was added and mixed to produce a solution for an adhesive layer (referred to as "adhesive composition 1A"). On one surface of a bi-axially elongated polyethylene terephthalate film having thickness of 75 $\mu$m, a silicone-based peeling agent was coated to form the peel treatment-subjected surface 2Aa. On the peel treatment-subjected surface 2Aa of a resulting transparent substrate sheet (referred to as "substrate layer 2A"), the adhesive composition 1A was coated until the thickness becomes 50 $\mu$m after drying. By drying for 3 min at 80°C, the adhesive layer 3A was formed. By laminating the release film 4A (trade name: E7006, manufactured by TOYOBO, Co., Ltd., thickness of 38 $\mu$m) on the surface of the adhesive layer 3A, the adhesive sheet 10 was produced (FIG. 6).

(Adhesive sheet 20)

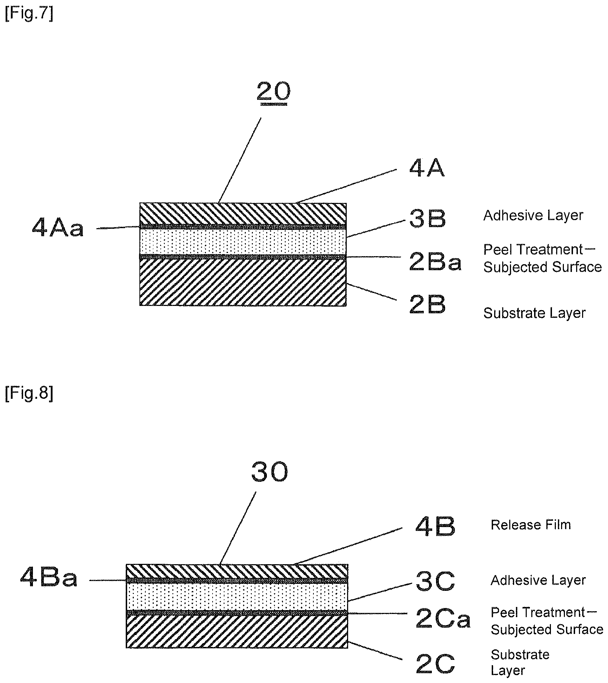

The adhesive sheet 20 was produced in the same manner as the adhesive sheet 10 except that on one surface of a bi-axially elongated polyethylene terephthalate film having thickness of 100 $\mu$m, a silicone-based peeling agent was coated to form the peel treatment-subjected surface 2Ba, the adhesive composition 1A was coated on the peel treatment-subjected surface 2Ba of a resulting transparent substrate sheet (referred to as "substrate layer 2B") until the thickness becomes 25 $\mu$m after drying, and the adhesive layer 3B was formed by drying for 3 min at 80°C (FIG. 7).

(Adhesive sheet 30)

To 1 kg solution of SK DYNE 1451 (trade name, manufactured by Soken Chemical & Engineering Co., Ltd., solid concentration of 30%), 5.0 g of a curing agent (trade name: L-45, manufactured by Soken Chemical & Engineering Co., Ltd.) and 1.8 g of promoter-S (trade name, manufactured by Soken Chemical & Engineering Co., Ltd.) were added and mixed to produce a solution for an adhesive layer (referred to as "adhesive composition 1B").
On one surface of a bi-axially elongated polyethylene terephthalate film having thickness of 100 $\mu$m, a silicone-based peeling agent was coated to form the peel treatment-subjected surface 2Ca. On the peel treatment-subjected surface 2Ca of a resulting transparent substrate sheet (referred to as "substrate layer 2C"), the adhesive composition 1B was coated until the thickness becomes 50 $\mu$m after drying. By drying for 3 min at 80°C, the adhesive layer 3C was formed. By laminating the release film 4B (trade name: MRF25, manufactured by Mitsubishi Plastics Inc., thickness of 25 $\mu$m) on the surface of the adhesive layer 3C, the adhesive sheet 30 was produced (FIG. 8).

(Adhesive sheet 40)

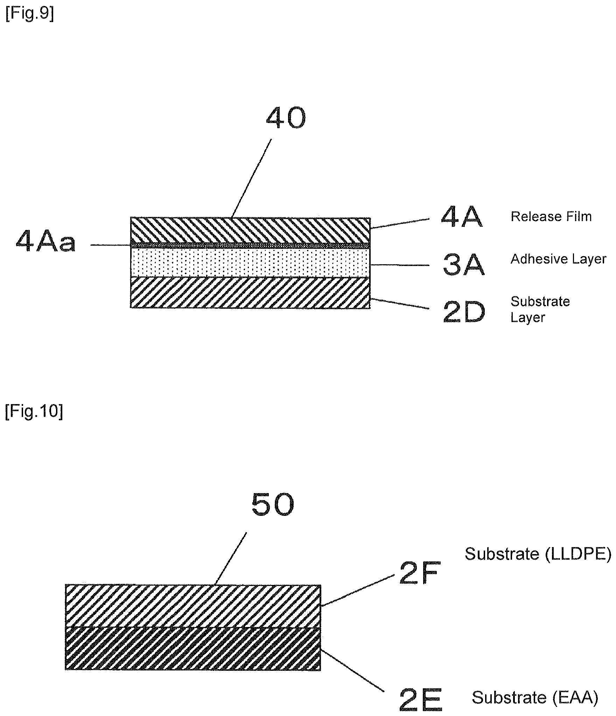

The adhesive sheet 40 was produced in the same manner as the adhesive sheet 10 except that a transparent resin sheet (referred to as "substrate layer 2D") consisting of a bi-axially elongated polyethylene terephthalate film having thickness of 75 $\mu$m was used instead of the substrate layer 2A (FIG. 9).

(Substrate sheet 50)

Low density linear chain polyethylene (LLDPE, trade name: NUCG-5472, manufactured by Nippon Unicar Company Limited) and ethylene-acrylic acid copolymer resin (EAA, trade name: Yukalon EAA, manufactured by Mitsubishi Petro-Chemical Co., Ltd.) were separately melted and then co-extruded to produce the substrate sheet 50 having thickness of 40 $\mu$m which consists of the substrate layer 2F consisting of low density linear chain polyethylene having thickness of 20 $\mu$m and the substrate layer 2E consisting of ethylene-acrylic acid copolymer having thickness of 20 $\mu$m (FIG. 10).

(Substrate sheet 60)

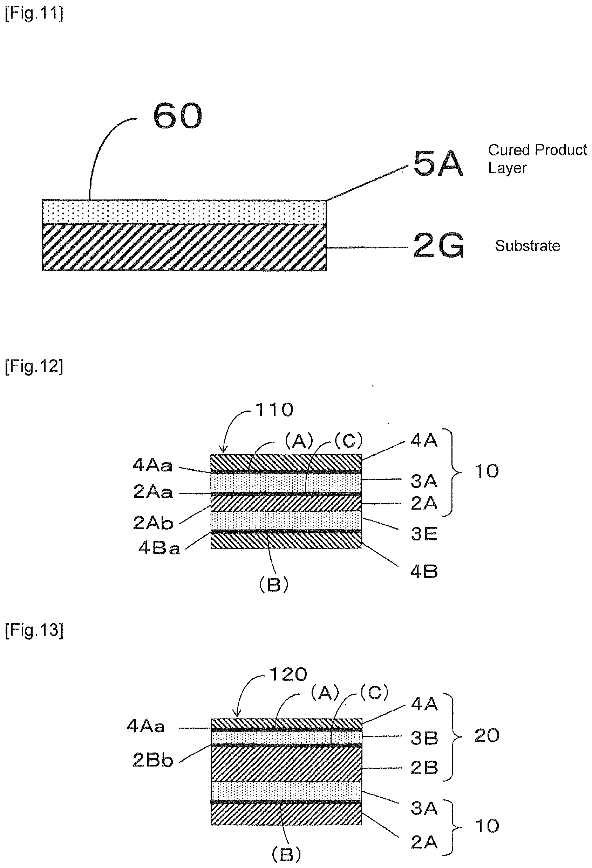

On one surface of a transparent resin sheet (referred to as "substrate layer 2G") consisting of a bi-axially elongated polyethylene terephthalate film having thickness of 50 $\mu$m (without any peeling treatment), an active energy ray-curable resin composition (1 kg of UV7510B (trade name) manufactured by Nippon Synthetic Chemical Industry Co., Ltd. and 20 g of a photopolymerization initiator, IRGACURE 184 (trade name), manufactured by Ciba Specialty Chemicals) was coated to thickness of 25 $\mu$m. By irradiating UV ray with an accumulated light quantity of 600 mJ/cm$^2$ by using a high pressure mercury lamp, the coated film was cured to form the cured product layer 5A. Accordingly, the substrate sheet 60 with thickness of 75 $\mu$m was produced (FIG. 11).

<Example 1>

On the adhesive layer-uncoated surface 2Ab of the substrate layer 2A in the adhesive sheet 10 (i.e. a surface on which no peeling treatment was performed), the adhesive composition 1A was coated until the thickness becomes 50 μm after drying. By drying for 3 min at 80°C, the adhesive layer 3E was formed. On top of the surface of the adhesive layer 3E, the peel treatment-subjected surface 4Ba of the release film 4B (trade name: MRF25, manufactured by Mitsubishi Plastics Inc., thickness of 25 μm) was overlaid and laminated to produce the adhesive sheet laminate 110 (total thickness of 175 μm) (FIG. 12).

With the adhesive sheet laminate 110, the 90° peel strength of each interface including the interface (A) between the release film 4A and the adhesive layer 3A, the interface (C) between the adhesive layer 3A and the substrate layer 2A, and the interface (B) between the adhesive layer 3E and the release film 4B was measured.

Further, the 90° peel strength (A) of the interface (A) between the release film 4A and the adhesive layer 3A is a measured value of 90° peel strength when the release film 4A is peeled off from the adhesive layer 3A, the 90° peel strength (C) of the interface (C) between the adhesive layer 3A and the substrate layer 2A is a measured value of 90° peel strength when the adhesive layer 3A is peeled off from the substrate layer 2A, and the 90° peel strength (B) of the interface (B) between the adhesive layer 3E and the release film 4B is a measured value of 90° peel strength when the release film 4B is peeled off from the adhesive layer 3A.

In this case, the ratio of 90° peel strength in each interface was as follows: (B) / (A) = 1.22, and (C) / (B) = 1.25.

<Example 2>

On the untreated surface 2Bb of the substrate layer 2B in the adhesive sheet 20, the adhesive side of the adhesive sheet 10 which is exposed by peeling the release film 4A was overlaid and laminated followed by aging for seven days at 25°C. Accordingly, the adhesive sheet laminate 120 (total thickness of 175 μm) was produced (FIG. 13).

With the adhesive sheet laminate 120, the 90° peel strength of each interface including the interface (A) between the release film 4A and the adhesive layer 3B, the interface (C) between the adhesive layer 3B and the substrate layer 2B, and the interface (B) between the adhesive layer 3A and the substrate layer 2A was measured.

Further, the 90° peel strength (A) of the interface (A) between the release film 4A and the adhesive layer 3B is a measured value of 90° peel strength when the release film 4A is peeled off from the adhesive layer 3B, the 90° peel strength (C) of the interface (C) between the adhesive layer 3B and the substrate layer 2B is a measured value of 90° peel strength when the adhesive layer 3B is peeled off from the substrate layer 2B, and the 90° peel strength (B) of the interface (B) between the adhesive layer 3A and the substrate layer 2A is a measured value of 90° peel strength when the adhesive layer 3A is peeled off from the substrate layer 2A.

In this case, the ratio of 90° peel strength in each interface was as follows: (B) / (A) = 1.31, and (C) / (B) = 2.34.

<Example 3>

To 1 kg of the acrylic acid ester copolymer consisting of 75 parts by weight of 2-ethylhexylacrylate, 20 parts by weight of vinyl acetate, and 5 parts by weight of acrylic acid, 20 g of UV-curable resin propoxylated pentaerythritol triacrylate (trade name: ATM-4 PL, manufactured by Shin-Nakamura Chemical Co., Ltd.) as a cross-linking agent and 10 g of a photopolymerization initiator (trade name: ESACURE TZT, manufactured by Lanberti S.P.A.) were added and mixed to produce an adhesive composition 1C.

On the surface of the substrate layer 2F (LLDPE) in the substrate sheet 50, the adhesive composition 1C was melt-extruded to have the thickness of 85 μm and to form the adhesive composition layer 3f. After that, the peel treatment-subjected surface 4Ca of the release film 4C (trade name: K1571, manufactured by TOYOBO, Co., Ltd., thickness of 50 μm) was laminated and compressed against the adhesive composition layer 3f.

Subsequently, on the surface of the substrate layer 2E (EAA) in the substrate sheet 50, the adhesive surface of the adhesive sheet 10 which is exposed by peeling the release film 4A was overlaid and laminated to obtain a laminate.

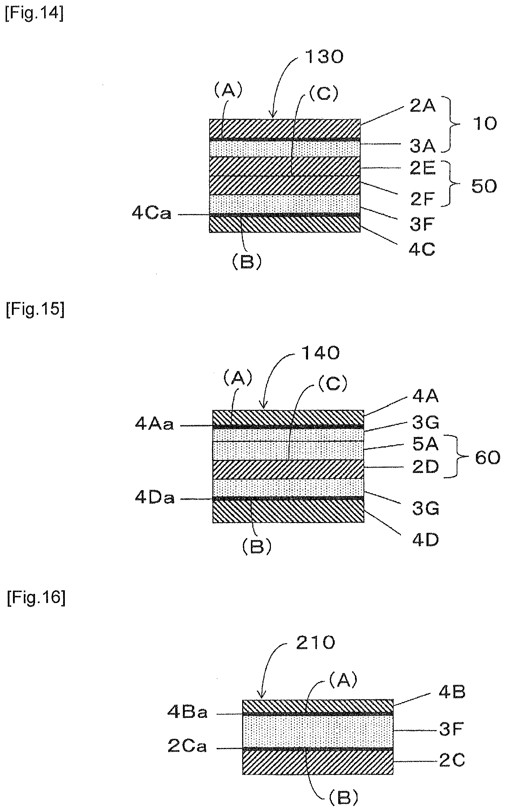

After that, from the release film 4C side, by irradiating UV ray on the laminate with an accumulated light quantity of 1,000 mJ/cm$^2$ by using a high pressure mercury lamp, the adhesive composition layer 3f was cured by cross-linking. Accordingly, the adhesive sheet laminate 130 (total thickness of 175 μm) was produced as the adhesive layer 3F (FIG. 14).

With the adhesive sheet laminate 130, the 90° peel strength of each interface including the interface (A) between the substrate layer 2A and the adhesive layer 3A, the interface (B) between the adhesive layer 3F and the release film 4C, and the interface (C) between the substrate layer 2F and the substrate layer 2E was measured.

Further, the 90° peel strength (A) of the interface (A) between the substrate layer 2A and the adhesive layer 3A is a measured value of 90° peel strength when the adhesive layer 3A is peeled off from the substrate layer 2A, the 90° peel strength (B) of the interface (B) between the adhesive layer 3F and the release film 4C is a measured value of 90° peel strength when the release film 4C is peeled off from the adhesive layer 3F, and the 90° peel strength (C) of the interface (C) between the substrate layer 2F and the substrate layer 2E is a measured value of 90° peel strength when the substrate layer 2E is peeled off from the substrate layer 2F.

In this case, the ratio of 90° peel strength in each interface was as follows: (B) / (A) = 2.17, and (C) / (B) = 3.63.

<Example 4>

On both surfaces of the substrate sheet 60, i.e. on surface of the cured product layer 5A and the substrate layer 2D, the adhesive composition 1C which has been prepared in the same manner as the Example 3 was extruded and coated to have the thickness of 50 $\mu$m and to form the adhesive composition layer 3g.

Next, on the surface of adhesive composition layer 3g in the curing product layer 5A side, the release film 4A (trade name: E7006, manufactured by TOYOBO, Co., Ltd., thickness of 38 $\mu$m) was laminated while the release film 4D (trade name: MRF75, manufactured by Mitsubishi Plastics Inc., thickness of 75 $\mu$m) was laminated on the surface of the adhesive composition layer 3g in the substrate layer 2D side to obtain a laminate (total thickness of 175 $\mu$m).

After that, by irradiating UV ray on the laminate from the front and rear surfaces with an accumulated light quantity of 1,000 mJ/cm$^2$ by using a high pressure mercury lamp, the adhesive composition layer 3g, 3g was cured by cross-linking. Accordingly, the adhesive sheet laminate 140 (total thickness of 175 $\mu$m) was produced as the adhesive layer 3G, 3G (FIG. 15).

With the adhesive sheet laminate 140, the 90° peel strength of each interface including the interface (A) between the adhesive layer 3G and the release film 4A, the interface (B) between the adhesive layer 3G and the release film 4D, and the interface (C) between the substrate layer 2D and the cured product layer 5A was measured.

Further, the 90° peel strength (A) of the interface (A) between the adhesive layer 3G and the release film 4A is a measured value of 90° peel strength when the release film 4A is peeled off from the adhesive layer 3G, the 90° peel strength (B) of the interface (B) between the adhesive layer 3G and the release film 4D is a measured value of 90° peel strength when the release film 4D is peeled off from the adhesive layer 3G, and the 90° peel strength (C) of the interface (C) between the substrate layer 2D and the cured product layer 5A is a measured value of 90° peel strength when the cured product layer 5A is peeled off from the substrate layer 2D.

In this case, the ratio of 90° peel strength in each interface was as follows: (B) / (A) = 1.14, and (C) / (B) = 1.46.

<Example 5>

The adhesive layer solution (herein below referred to as "adhesive composition 1D") obtained by adding and mixing 2.4 g of a curing agent E-AX (trade name, manufactured by Soken Chemical & Engineering Co., Ltd.) to 1 kg of SK DYNE 2094 (trade name, manufactured by Soken Chemical & Engineering Co., Ltd., solid concentration of 30%) was coated on the release treatment-subjected surface of the release film 4A (trade name: E7006, manufactured by TOYOBO, Co., Ltd., thickness of 38 $\mu$m) until the thickness becomes 50 $\mu$m after drying. By drying for 3 min at 80°C, the adhesive layer 3J was formed. By laminating the sheet 7A composed of a thermoplastic fluoro resin (i.e. a sheet made of a copolymer of tetrafluoroethylene and ethylene, also referred to as "ETFE sheet", AFLEX 25N 1250NT, manufactured by Asahi Glass Co., Ltd., thickness of 25 $\mu$m) on the surface of the adhesive layer 3J as a laminate different from the adhesive layer 3J, the adhesive sheet 70 was produced.

Meanwhile, on the release treatment-subjected surface of the release film 4B (trade name: MRF25, manufactured by Mitsubishi Plastics Inc., thickness of 25 $\mu$m), the adhesive composition 1A was coated to have the thickness of 100 $\mu$m. By drying for 3 min at 80°C, the adhesive layer 3A was formed.

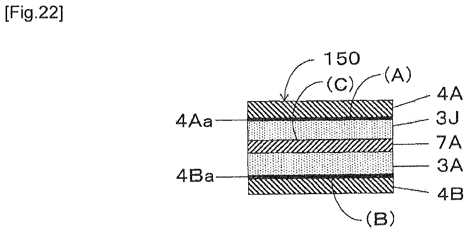

By laminating the adhesive sheet 70 on the adhesive layer 3A so that the ETFE sheet 7A is brought into contact with the adhesive layer 3A, the adhesive sheet laminate 150 (total thickness of 175 $\mu$m) was produced (FIG. 22).

With the adhesive sheet laminate 150, the 90° peel strength of each interface including the interface (A) between the release film 4A and the adhesive layer 3J, the interface (C) between the adhesive layer 3J and the ETFE sheet 7A, and the interface (B) between the adhesive layer 3A and the release film 4B was measured.

Further, the 90° peel strength (A) of the interface (A) between the release film 4A and the adhesive layer 3J is a measured value of 90° peel strength when the release film 4A is peeled off from the adhesive layer 3J, the 90° peel strength (C) of the interface (C) between the adhesive layer 3J and the ETFE sheet 7A is a measured value of 90° peel strength when the adhesive layer 3J is peeled off from the ETFE sheet 7A, and the 90° peel strength (B) of the interface (B) between the adhesive layer 3A and the release film 4B is a measured value of 90° peel strength when the release film 4B is peeled off from the adhesive layer 3A.

In this case, the value of the 90° peel strength (A) was 0.38 N/50 mm, the value of the 90° peel strength (B) was 0.5 N/50 mm, and the value of the 90° peel strength (C) was 0.9 N/50 mm. As such, the ratio of 90° peel strength in each interface was as follows: (B) / (A) = 1.32, and (C) / (B) = 1.8.

Further, the adhesion force of the adhesive layer 3A on glass was 7.0 N/25 mm.

<Comparative example 1>

On one surface of a bi-axially elongated polyethylene terephthalate film having the thickness of 100 $\mu$m, a silicone-based peeling agent was coated to form the peel treatment-subjected surface 2Ca. On the peel treatment-subjected surface 2Ca of a resulting transparent resin sheet (referred to as "substrate layer 2C"), the adhesive composition 1C prepared in the same manner as the Example 3 was melt-extruded to have the thickness of 175 μm and to form the adhesive composition layer 3f. After that, the release film 4B (trade name: MRF25, manufactured by Mitsubishi Plastics Inc., thickness of 25 μm) was laminated and compressed via the adhesive composition layer 3f to obtain a laminate.

After that, by irradiating UV ray on the laminate from the front and rear surfaces with an accumulated light quantity of 1,000 mJ/cm$^2$ by using a high pressure mercury lamp, the adhesive composition layer 3f was cured by cross-linking. Accordingly, the adhesive sheet laminate 210 (total thickness of 175 μm) was produced as the adhesive layer 3F (FIG. 16).

<Comparative example 2>

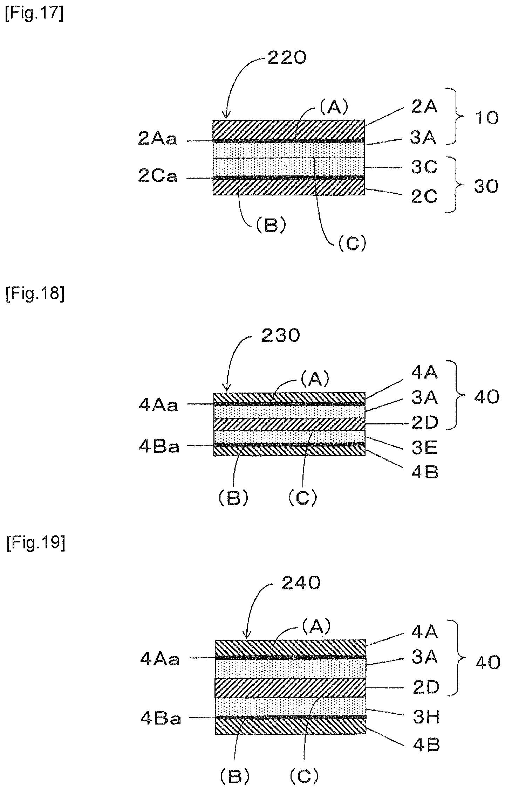

On the surface of the adhesive layer 3A in the adhesive sheet 10, which is exposed by peeling the release film 4A, the adhesive layer 3C in the adhesive sheet 30, which is exposed by peeling the release film 4B, was overlaid and laminated to produce the adhesive sheet laminate 220 (total thickness of 100 μm) (FIG. 17).

<Comparative example 3>

Except that the adhesive sheet 40 is used instead of the adhesive sheet 10, the adhesive sheet laminate 230 was produced in the same manner as the Example 1 (FIG. 18).

<Comparative example 4>

To 1 kg solution of an acrylic resin copolymer diluted in toluene and cyclohexane (trade name: POLYTHICK AH310-S, manufactured by Sanyo Chemical Ind. Ltd., solid concentration of 37%), 10 g of a curing agent (trade name: POLYTHICK SC-75, manufactured by Sanyo Chemical Ind. Ltd.) and 150 g of heat-expanding type microcapsule (trade name: MICROSPHERE F-48, manufactured by Matsumoto Yushi Seiyaku, Co., Ltd.) were added and mixed to produce a solution for an adhesive layer (referred to as "adhesive composition 1D").

On the surface of the substrate layer 2D in the adhesive sheet 40 (i.e. untreated surface), the adhesive composition 1D was coated and dried until the thickness becomes 50 μm after drying to form the adhesive layer 3H. Subsequently, the release film 4B (trade name: MRF25, manufactured by Mitsubishi Plastics Inc., thickness of 25 μm) was laminated and compressed onto the adhesive layer 3H to obtain the adhesive sheet laminate 240 (total thickness of 175 μm) (FIG. 19).

<Comparative example 5>

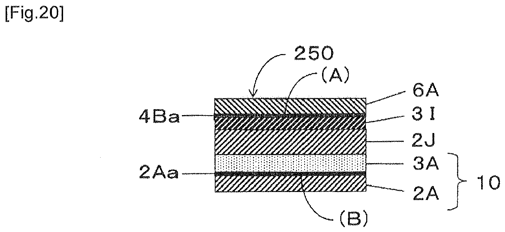

On one surface of the substrate layer 2J having thickness of 75 μm, which consists of a biaxially elongated polyethylene terephthalate film, a redetachable adhesive layer 3I having thickness of 25 μm and the protective film 6A were laminated. Meanwhile, on the other surface of the substrate layer 2J, the adhesive layer 3A, which is exposed by peeling the release film 4a in the adhesive sheet 10, was compressed to form a laminate. After aging for seven days at 25°C, the adhesive sheet laminate 250 (total thickness of 150 μm) was produced (FIG. 20).

<Comparative example 6>

Two pieces of glass plate (100 mm x 100 mm x 3 mm) were arranged to face each other, and a silicone rubber sheet (the peripheral edge part of three sides: 5 mm, and thickness of 175 μm) were inserted between them and then the three sides were sealed.

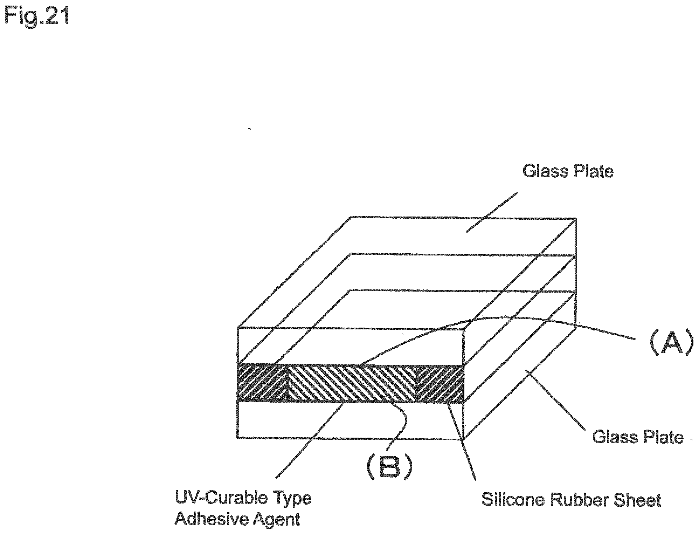

A UV-curable type adhesives (trade name: UVEKOL-S20, manufactured by Daicel-Cytec Co., Ltd.) was filled through the unsealed side of the glass plates facing to each other. By irradiating UV ray with an accumulated light quantity of 600 mJ/cm$^2$ by using a high pressure mercury lamp, the adhesives were cured to produce a glass laminate (FIG. 21).

[Table 1]

| | Example 1 | | | Example 2 | | | Example 3 | | | Example 4 | | | Example 5 | | |
|---|---|---|---|---|---|---|---|---|---|---|---|---|---|---|---|
| | (A) | (B) | (C) | (A) | (B) | (C) | (A) | (B) | (C) | (A) | (B) | (C) | (A) | (B) | (C) |
| Interlayer peel strength (N/50mm) | 0.34 | 0.41 | 0.52 | 0.34 | 0.44 | 1.02 | 0.3& | 0.85 | 3.10 | 0.36 | 0,41 | 0.60 | 0.3.8 | 0.50 | 0.90 |
| Glass adhesion force (N25mm | 10 (Adhesive surface (A)) | | | 9.4 (Adhesive surface (A) | | | 7.9 (Adhesive surface (B)) | | | 8.1 (Adhesive surface (A)) | | | 7.0 (Adhesive surface (A)) | | |
| Durability | ○ | | | ○ | | | ○ | | | ○ | | | ○ | | |
| Removability | ○ | | | ○ | | | ○ | | | ○ | | | ○ | | |

[Table 2]

| | Comparative Example 1 | | | Comparative Example 2 | | | Comparative Example 3 | | | Comparative Example 4 | | | Comparative Example 5 | | Comparative Example 6 | |
|---|---|---|---|---|---|---|---|---|---|---|---|---|---|---|---|---|
| | (A) | (B) | (C) | (A) | (B) | (C) | (A) | (B) | (C) | (A) | (B) | (C) | (A) | (B) | (A) | (B) |
| Inlerlsyer peel strength (N/50mm) | 0.40 | 1.60 | - | 1.40 | 044 | | 0.34 | 0,42 | 12,00 | 0,35 | 0.50 | 14.00 | 0.41 | 0.55 | - | - |
| Glass adhesion force (N/25mm) | 11 (Adhesive surface (A)) | | | *2,5 (Adhesive surface (B)) | | | 9.5 (Adhesive surface (B)) | | | *9.2 (Adhesive surface (B)) | | | *0.8 (Adhesive surface (A)) | | | |
| Durability | ○ | | | ○ | | | ○ | | | × | | | × | | ○ | |
| Removability | × | | | Δ | | | × | | | ○ | | | Δ | | × | |

(Results and discussion)

The adhesive obtained from Examples 1 to 5 showed easy redetachment and excellent redetachment workability after it is formed into a glass laminate, and exhibited no significant change in appearance according to the durability test.

On the other hand, the adhesive sheet laminate 210 obtained from the Comparative example 1 has no detachable interface and, as being strongly adhered on glass, a crack appeared at the time of separating the glass, and therefore exhibited poor reworkability.

With respect to the adhesive sheet laminate 220 obtained from the Comparative example 2, adhesion force between the adhesive sheet and glass is relatively weak. As such, although being separable after a certain period of time, it has poor workability and weak adhesion force, showing the occurrence of foaming originating from a defect on an interface between the glass and the adhesive layer according to the durability test. Further, the adhesive layer 3A and the adhesive layer 3C are strongly bonded to each other in the adhesive sheet laminate 220, and therefore redetachment from the interface (C) was difficult to achieve.

As the internal layer of the adhesive sheet laminate 230 obtained from the Comparative example 3 has no detachable interface, it showed poor removability similar to the Comparative example 1.

The adhesive sheet laminate 240 obtained from the Comparative example 4 was redetachable in accordance with foaming of the adhesive layer 3H by heating. However, a part of the foaming agent underwent the reaction even during the durability test so that a significant deterioration in appearance was observed.

The adhesive sheet laminate 250 obtained from the Comparative example 5 was redetachable when the redetachable adhesive side is slowly pulled and peeled off from the glass. However, as the bonding surface with the glass is a redetachable interface, the adhesion force is weak and tiny detachment was found in the interface between the glass and the redetachable adhesive layer interface.

With respect to the glass laminate obtained from the Comparative example 6, it was cumbersome to remove air bubbles present in the liquid of adhesive at the time of filling adhesive. Further, although the durability of the glass laminate was excellent, adhesion was so strong that removability was rather poor.

**Claims**

1. An adhesive sheet laminate for bonding two adherends, wherein the adhesive sheet laminate has release films formed on both outer sides of an adhesive material, and has an interface (called "internal detachment interface") in the inside thereof, which is detachable from the side different from the bonding surfaces of the adhesive material with the adherends, wherein

   the relation among 90° peel strength (A) of the interface between the release film at one side and the adhesive material, the 90° peel strength (B) of the interface between the release film at the other side and the adhesive material, and the 90° peel strength (C) of the internal detachment interface satisfies the following relations (1) to (3)

$$(1) \quad A < B < C$$

$$(2) \quad B/A = 1.1 \text{ to } 3.0$$

$$(3) \quad C/B = 1.1 \text{ to } 7.0,$$

   and wherein the internal detachment interface has smaller peel strength than the bonding surfaces of the adhesive material with the adherends.

2. The adhesive sheet laminate according to claim 1, wherein two or more layers of the adhesive layer are comprised and a constitution that the interface between the adhesive layers is an internal detachment interface is comprised.

3. The adhesive sheet laminate according to claim 1, wherein two or more layers of the adhesive layer and at least one layer different from the adhesive layers are comprised and one of the interfaces between the adhesive layer and the layer different from the adhesive layer is an internal detachment interface.

4. The adhesive sheet laminate according to claim 1, wherein two or more layers of the adhesive layer and at least one layer of the substrate layer are comprised and one of the interfaces between the substrate layer and the adhesive layer is an internal detachment interface.

5. The adhesive sheet laminate according to claim 1, wherein two or more layers of the adhesive layer and at least one layer of the release agent layer are comprised and one of the interfaces between the release agent layer and the adhesive layer is an internal detachment interface.

6. The adhesive sheet material according to claim 1, wherein two or more layers of the substrate layer and two or more layers of the adhesive layer are comprised and one of the interfaces between the substrate layer and the adhesive layer is an internal detachment interface.

7. The adhesive sheet laminate according to any one of the claims 1 to 6, wherein the adhesive material is comprised of a transparent material.

8. Use of the adhesive sheet laminate according to claim 7, wherein the release films are peeled off from the adhesive sheet laminate, the exposed adhesive material is used by being present between any two members of a transparent covering material, a touch panel material, and an image display device.

**Patentansprüche**

1. Ein Haftfolienverbund zur Verbindung zweier anhaftender Gegenstände, wobei der Haftfolienverbund über auf beiden äußeren Seiten aus Klebematerial gebildete Freigabeschichten verfügt, und im Inneren davon über eine Grenzfläche (genannt "innere Abtrennungsgrenzfläche") verfügt, die von der Seite, die sich von den Verbindungsoberflächen des Haftmaterials mit den anhaftenden Gegenständen unterscheidet, ablösbar ist, wobei die Beziehung zwischen der 90°-Abziehfestigkeit (A) der Grenzfläche zwischen der Freigabeschicht auf einer Seite und dem Klebematerial, der 90°-Abziehfestigkeit (B) der Grenzfläche zwischen der Freigabeschicht auf der anderen Seite und dem Klebematerial, und der 90°-Abziehfestigkeit (C) der inneren Abtrennungsgrenzfläche den folgenden Beziehungen (1) bis (3) genügt

$$(1) \quad A < B < C$$

$$(2) \quad B / A = 1{,}1 \text{ bis } 3{,}0$$

$$(3) \quad C / B = 1{,}1 \text{ bis } 7{,}0,$$

und wobei die innere Abtrennungsgrenzfläche eine geringere Abziehfestigkeit hat als die Bindungsoberflächen des Klebematerials mit den anhaftenden Gegenständen

2. Der Haftfolienverbund gemäß Anspruch 1, wobei zwei oder mehr Lagen der Haftschicht umfasst sind, und der Aufbau, dass die Grenzfläche zwischen den Haftschichten eine innere Abtrennungsgrenzfläche ist, umfasst ist.

3. Der Haftfolienverbund gemäß Anspruch 1, wobei zwei oder mehr Lagen der Haftschicht und mindestens eine von den Haftschichten unterschiedliche Schicht umfasst sind, und eine der Grenzflächen zwischen der Haftschicht und der von der Haftschicht unterschiedlichen Schicht eine innere Abtrennungsgrenzfläche ist.

4. Der Haftfolienverbund gemäß Anspruch 1, wobei mindestens zwei oder mehr Lagen der Haftschicht und mindestens eine Lage der Substratschicht umfasst sind, und eine der Grenzflächen zwischen der Substratschicht und der Haftschicht eine innere Abtrennungsgrenzfläche ist.

5. Der Haftfolienverbund gemäß Anspruch 1, wobei mindestens zwei oder mehr Lagen der Haftschicht und mindestens eine Lage der Freigabemittelschicht umfasst sind, und eine der Grenzflächen zwischen der Freigabemittelschicht und der Haftschicht eine innere Abtrennungsgrenzfläche ist.

**6.** Der Haftfolienverbund gemäß Anspruch 1, wobei zwei oder mehr Lagen der Substratschicht und zwei oder mehr Lagen der Haftschicht umfasst sind, und eine der Grenzflächen zwischen der Substratschicht und der Haftschicht eine innere Abtrennungsgrenzfläche ist.

**7.** Der Haftfolienverbund gemäß einem der Ansprüche 1 bis 6, wobei das Klebematerial aus einem transparenten Material besteht.

**8.** Verwendung des Haftfolienverbundes gemäß Anspruch 7, wobei die Freigabeschichten von dem Haftfolienverbund abgezogen werden, und das freigelegte Klebematerial durch seine Anwesenheit zwischen zwei beliebigen Bestandteilen gewählt aus einem transparenten Deckmaterial, einem Touch Panel-Material und einer Bildanzeigevorrichtung verwendet wird.

**Revendications**

**1.** Stratifié de feuille adhésive pour lier deux surfaces à coller, dans lequel le stratifié de feuille adhésive a des films antiadhésifs formés sur les deux côtés extérieurs d'un matériau adhésif, et a une interface (appelée "interface de détachement interne") à l'intérieur de celui-ci, qui peut être détachée du côté différent des surfaces de liaison du matériau adhésif avec les surfaces à coller, dans lequel

la relation entre une résistance au pelage à 90° (A) de l'interface entre le film antiadhésif d'un côté et le matériau adhésif, une résistance au pelage à 90° (B) de l'interface entre le film antiadhésif de l'autre côté et le matériau adhésif, et une résistance au pelage à 90° (C) de l'interface de détachement interne satisfait les relations (1) à (3) suivantes

$$(1)\ A < B < C$$

$$(2)\ B\,/\,A = 1,1\ \text{à}\ 3,0$$

$$(3)\ C\,/\,B = 1,1\ \text{à}\ 7,0,$$

et
dans lequel l'interface de détachement interne a une résistance au pelage inférieure à celle des surfaces de liaison du matériau adhésif avec les surfaces à coller.

**2.** Stratifié de feuille adhésive selon la revendication 1, dans lequel deux couches ou plus de la couche adhésive sont formées et une constitution selon laquelle l'interface entre les couches adhésives est une interface de détachement interne est formée.

**3.** Stratifié de feuille adhésive selon la revendication 1, dans lequel deux couches ou plus de la couche adhésive et au moins une couche différente des couches adhésives sont formées et l'une des interfaces entre la couche adhésive et la couche différente de la couche adhésive est une interface de détachement interne.

**4.** Stratifié de feuille adhésive selon la revendication 1, dans lequel deux couches ou plus de la couche adhésive et au moins une couche de la couche de substrat sont formées et l'une des interfaces entre la couche de substrat et la couche adhésive est une interface de détachement interne.

**5.** Stratifié de feuille adhésive selon la revendication 1, dans lequel deux couches ou plus de la couche adhésive et au moins une couche de la couche d'agent antiadhésif sont formées et l'une des interfaces entre la couche d'agent antiadhésif et la couche adhésive est une interface de détachement interne.

**6.** Matériau de feuille adhésive selon la revendication 1, dans lequel deux couches ou plus de la couche de substrat et deux couches ou plus de la couche adhésive sont formées et l'une des interfaces entre la couche de substrat et la couche adhésive est une interface de détachement interne.

**7.** Stratifié de feuille adhésive selon l'une quelconque des revendications 1 à 6, dans lequel le matériau adhésif est constitué d'un matériau transparent.

**8.** Utilisation du stratifié de feuille adhésive selon la revendication 7, dans laquelle les films antiadhésifs sont décollés du stratifié de feuille adhésive, le matériau adhésif exposé est utilisé en étant présent entre deux éléments quelconques d'un matériau de couverture transparent, un matériau de panneau tactile et un dispositif d'affichage d'image.

[Fig.1]

[Fig.2]

[Fig.3]

[Fig.4]

[Fig.5]

Internal Detachment Interface
(101g, 102g, 103g)

105a

Adhesive Material
(101, 102, 103)

105b

[Fig.6]

10

Peel Treatment-
subjected Surface 4Aa

4A    Release Film

3A    Adhesive Layer

2Aa   Peel Treatment-
      Subjected Surface

2A    Substrate Layer

[Fig.7]

20

4A

4Aa

3B    Adhesive Layer

2Ba    Peel Treatment—Subjected Surface

2B    Substrate Layer

[Fig.8]

30

4B    Release Film

4Ba

3C    Adhesive Layer

2Ca    Peel Treatment—Subjected Surface

2C    Substrate Layer

[Fig.9]

40

4Aa

4A    Release Film

3A    Adhesive Layer

2D    Substrate Layer

[Fig.10]

50

2F    Substrate (LLDPE)

2E    Substrate (EAA)

[Fig.11]

60

5A — Cured Product Layer

2G — Substrate

[Fig.12]

110

(A) (C) 4A ⎫
4Aa ⎬ 10
2Aa 3A
2Ab 2A ⎭
4Ba 3E
(B) 4B

[Fig.13]

120

(A) (C) 4A ⎫
4Aa 3B ⎬ 20
2Bb 2B ⎭
3A ⎫
2A ⎬ 10
(B) ⎭

[Fig.14]

[Fig.15]

[Fig.16]

[Fig.17]

[Fig.18]

[Fig.19]

[Fig.20]

Fig.21

[Fig.22]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10260395 A
- JP 2003238915 A
- JP 2004231723 A
- WO 2009054108 A1
- JP 2006299053 A